# EUROPEAN PATENT APPLICATION

(11) **EP 4 095 772 A1**
(43) Date of publication of application: **30.11.2022**
(21) Application number: 21176666.2
(22) Date of filing: 28.05.2021
(51) Int. Cl.: G06Q 10/04, G05B 19/418

(54) **OPTIMIZATION OF A PRODUCTION SYSTEM**

(71) Applicant: Siemens Aktiengesellschaft, 80333 München (DE)
(72) Inventor: Hakenberg, Mathias, Plainsboro, 08536 (US); Klein, Daniel, 92280 Kastl (DE); Varga, Berthold, 91052 Erlangen (DE); Wamser, Christian, 91341 Röttenbach (DE)

(57) **Abstract**

A method of optimizing a production system (10), comprising: receiving, by one or more processors (1), input parameters (X) comprising, preferably real time, location information of one or more production components (11, 12, 13), determining, by the one or more processors (1), one or more transport times between production stations (51, 59) of the production system (10) based on the location information of one or more production components (11, 12, 13),
adapting, by one or more processors (1), a production model (20) of the production system (10) based at least in part on the transport times,
and determining, by the one or more processors, one or more tasks to be executed by the production system (X) based on the adapted production model (20).

## Description

### TECHNICAL FIELD

The present application relates to control systems, i.e. systems automatically adjusting themselves to have a performance which is optimum according to some preassigned criterion. The application also relates to controlling a production process involving the use of models or simulators.

### BACKGROUND

Production planning is of importance in every factory, as it is only through efficient and correct planning that the full potential of a production can be exploited. Different types of production planning, such as resource planning and product order planning, may be distinguished.

Resource planning is basically about classifying and controlling existing resources, e.g., workers, machines, transport system, in such a way that efficient production is possible based on predetermined requirements, such as utilization, lead times or cost efficiency. The aim of product order planning is to arrange the products in their production sequence in such a way that the above-mentioned aspects are achieved as well as possible. In addition, both types of planning may influence each other.

Nowadays, there different ways to implement an efficient production planning, such as via special planning or scheduling boards or even dedicated software systems, have become known.

### SUMMARY

However, the known production planning systems may have one or more of the following drawbacks: finding the optimal solution given the sheer size of the possible parameter space is almost impossible, a quick response to real-time events is not possible or only with a long delay, and the inclusion of the location information of certain production components is not possible.

It is thus an object to provide an improve production system and production planning and control system.

According to a first aspect the object is achieved by a method of optimizing a production system, preferably optimizing the production planning. The method comprising the step of receiving, by one or more processors, input parameters comprising, preferably real time, location information of one or more production components. The method further comprising determining, by the one or more processors, one or more transport times between production stations of the production system based on the location information of one or more production components. The method further comprising the step of adapting, by one or more processors, a production model of the production system based at least in part on the transport times. The method further comprising determining, by the one or more processors, one or more tasks to be executed by the production system based on the adapted production model.

According to a second aspect the object is achieved by a computer program, comprising program code that when executed performs the method steps according to the first aspect.

According to a third aspect the object is achieved by a computer readable storage medium, comprising program code that when executed performs the method steps according to the first aspect.

According to a fourth aspect the object is achieved by a production control system. The production control system comprising one or more processors operative to adapt a production model of the production system based at least in part on input parameters from the production system. The production control system further operative to determine, by the one or more processors, one or more tasks to be executed by the production system based on the adapted production model.

### BRIEF DESCRIPTION OF THE DRAWINGS

- Figure 1: shows a production system comprising a locating system.
- Figure 2: shows a production system and corresponding production model.
- Figure 3: shows a production system comprising a locating system.
- Figure 4: shows a production system executing a scheduling loop.
- Figure 5: shows a production system and a transport route between production stations.
- Figure 6: shows an obstacle on a transport route between production stations.
- Figure 7: shows multiple intersecting transport routes in a production system.
- Figure 8: shows a production control system comprising a processor and a memory.

### DETAILED DESCRIPTION

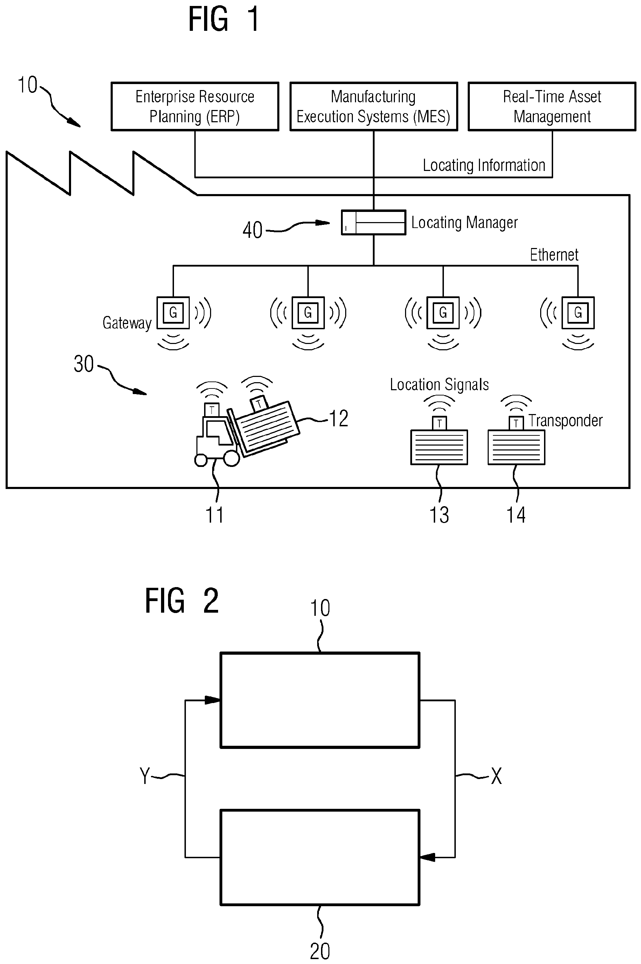

Figure 1 shows a production system 10, e.g., a factory, for producing one or more products and/or processing goods. As the case may be logistics operation is part of the production system. The production system 10 is equipped with a locating system 30, for example SIMATIC RTLS. The locating system 30 is a key component in the digital infrastructure for the factory of the future. For production components 11, 12, 13, 14 like, e.g., mobile robots or automated guided vehicles (AGVs), and automation software to be able to focus and respond autonomously, they need to know at any time what's where, and when. The locating system 30 performs this accurately and reliably. It locates objects, such as production components, with accuracy measured in centimeters and makes the positioning details available to higher-level systems in real time.

The relevant production components, e.g., workpieces, tools, AGVs or robots, are therefore fitted with a transponder T. The transponder T signals are bundled by gateways G and picked up by a higher-level system, e.g., ERP and/or MES as shown. Gateways G are fix reference points in the production system 10 for real-time locating. They record the transponder signals and give them a fixed position stamp. The location information is bundled and transmitted to a locating server, not shown. Transponders T may be fitted to workpieces, robots, vehicles, or other types of production components 11, 12, 13, 14, and may transmit a wireless signal at defined intervals. Transponders T can also be equipped with data interfaces, and transmit location details directly to the production control system or make them accessible for higher-level systems. The locating manager 40 is a software system that calculates the real-time position of the individual transponders and passes the details on to the higher-level systems via defined interfaces.

For a mobile robot to be directed over the optimum route, for instance, it needs to be provided continuously with data relating both to its own position and that of the product being processed. The same applies to Automatic Guided Vehicles (AGVs) which no longer follow fixed tracks but are able to navigate freely within a dynamically changing production environment.

Monitoring and documenting individual production tasks or steps also calls for a continuous comparison between the location of a production components, such as a tool, e.g., a screwdriver, and a production model, e.g., a digital 3D model, in order to correctly specify, monitor and document parameters such as the torque for a specific screw. Ultimately, a locating system 30 delivers the required information about "what's where and when" as it occurs in real time for every production component of relevance across applications in the production system 10. At the same time, a locating system 30 can help make processes leaner and more efficient. In the maintenance sector, locating production components 11, 12, 13, 14 for servicing can be simplified by automatically comparing the position of service personnel with the production model of the production system. Areas of application include the chemical and pharmaceutical industry, where it can be used to simplify the maintenance. Here, a locating system 30 can reduce the need for time-consuming searching and consequently minimize costs.

As mentioned, the active transponders T emit a radio signal at defined intervals which is received by at least three gateways G, each synchronized with the other. The gateways G transmit the collected data together with the transponder ID number and the receiving time via a gateway to the locating server, not shown. This software calculates the position of each transponder by a method called Time Difference of Arrival (TdoA). Accuracy is increased still further using flanking measures such as automatic correlation of location information with the production model of the production system 10. The data is then transmitted on the basis of defined rules by the server to different target systems ranging from Programmable Logic Controllers (PLCs), Manufacturing Execution Systems (MES) and other IT systems through to cloud-based applications based for instance on MindSphere. This means that dynamic self-organization of production processes may take place whereby the products are automatically transported to the next available production station by automated guided vehicles (AGVs).

There are many ways to optimize a production system 10 with a locating system 30. Starting by monitoring the entire material flow - from the warehouse to the transport routes of the transportation systems to the movements of tools, workpieces and production components, in general, within the production system 10. This will allow identification of bottlenecks and analyze material flow to shorten throughput. However, the potential for optimization of processes in factories or of production systems 10 in general usually does not take place.

Indeed, the best possible future production steps or tasks, taking into account various key performance parameters within factory, are planned, but this is usually manual work by a shift planner, and the optimization of the underlying key performance parameters is not guaranteed.

Now, production models and software tools will be described in relation to Figure 2.

To support the production planner, there are numerous tools on the market. Particularly noteworthy is the Siemens solution Preactor. Preactor has also become known under the term Siemens Opcenter APS (Advanced Planning Scheduling). Preactor supports the planner in its work by providing a framework with different analysis possibilities and optimization algorithms. Preactor can be seamlessly integrated into the IT infrastructure, so that all relevant data can be read in and submitted directly to the production system 10 after planning. However, Preactor is also a tool that must be operated manually by the planner and no real-time data is used. This means that after planning, e.g., faults cannot be taken into account immediately in the plan. The plan is therefore only valid until there is an initial deviation. A production plan may be understood as a sequence of one or more tasks to be executed by the production system 10, e.g., using one or more production components.

In addition to the already presented approaches, it is also possible to carry out production planning on the basis of simulations. For this purpose, a model of the production system, i.e. a production model 20, is created, which combines logical relationships of one or more production components of a production system in one model and in which the order of tasks to be executed can be varied. Especially in combination with an optimization algorithm, e.g., by connecting HEEDS to Plant Simulation, a powerful tool for production planning may be obtained. The problem here, however, is that no real-time data can be used and the computing time is also comparatively high.

Production planning includes all upcoming work steps or tasks to the existing production resources, taking into account the current allocation of these resources, in particular production components. If an optimization target is specified by the user - e.g. the desire for the shortest possible total production time - the best possible allocation with respect to this criterion can be determined by numerical optimization. The optimization problem to be solved involves integer decisions and is generally too computational to provide solutions for real production scenarios during operation. In a real production system 10, however, there are always deviations from the production plan, which require a quick adjustment or re-planning taking into account the new circumstances and therefore require such a quick solution of the optimization target.

The Receding Horizon Planner, RHP, also known as model predictive control, MPC, is a solver for production planning that can provide an approximate optimal solution in very short periods of time, and thus be able to respond flexibly to changes and deviations in ongoing production operations. Instead of the RHP any real-time scheduler may be used. The core of this solver is a branch-and-bound algorithm that solves the optimization problem for a subset of the upcoming production steps and estimates the cost of the unconsidered production steps by means of a heuristic. By limiting the planner to a subset of the complete problem, it is possible to scale the computational effort to provide a solution in a given time.

In practical implementation, the Receding Horizon Planner comprises two main components, both of which are based on a production model 20 of the production system 10. The first component is a condition or state estimator, which tries to reconstruct the current state as accurately as possible from the available data X received from the production system, e.g., measurement data, and the steps planned so far. The second part is the actual optimizer. Using the second part, various options for the continuation of production, e.g., different task sequences, are calculated and evaluated from the actual state determined in the first part. The best option Y found is submitted to the production control system of the production system 10 for execution.

The Receding Horizon Planner is usually executed cyclically at fixed time intervals. At the beginning of a cycle, also referred to as scheduling loop, the actual situation in the production system 10 is first determined by the above-mentioned condition estimator, i.e. the current and already planned usage of all production components, e.g., machines, as well as the outstanding production steps for the existing production tasks. This real-time data must be provided to the Receding Horizon Planner by the production system 10. In today's receding horizon planner, SCADA or MES systems are used to provide information about the production component usage and progress of the production tasks, but do not provide information about the location one or more production component is located in the production system.

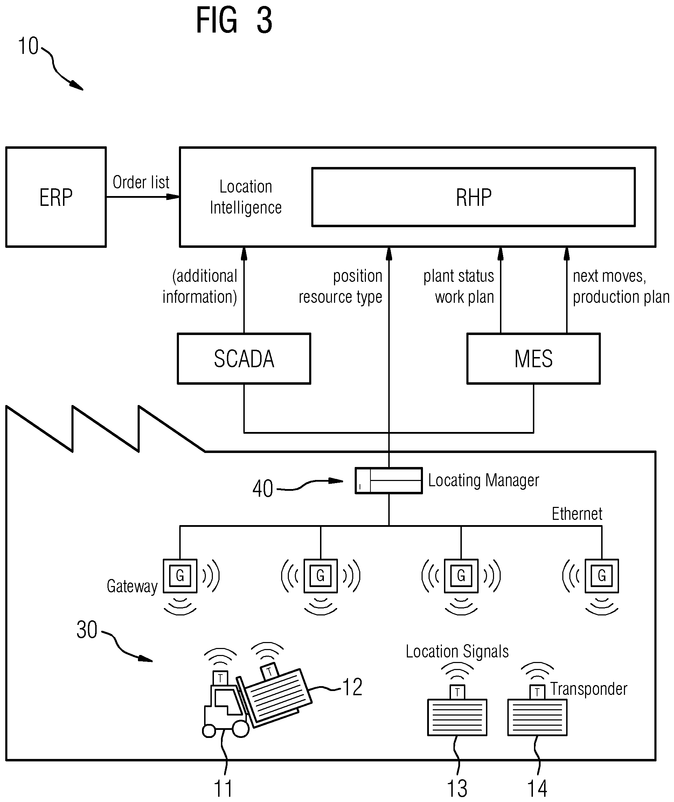

Now turning to Figure 3, the location information from the locating system 30 can be used by the Receding Horizon Planner to improve the planning result. The first step is the use of the location information in order to be able to determine the actual state of production system 10 more precisely. An example is the arrival time of a production component 11, 12, 13, 14 at a particular production station, such as a machine. Without the information form the locating system 30, the last available location was the point in time a production component, e.g. an assembly part, has left the warehouse. Thereafter, from the point of view of the state estimator, this production component is in blind flight until it reappears at a production station, such as said machine. With a locating system 30, the Receding Horizon Planner receives location information at any time and can directly detect a delay during transport and take it into account early in the further planning.

The second way the Receding Horizon Planner can benefit from the data of a locating system 30 is to customize the production model for optimization. Such a model includes, for example, the estimated transport times between different locations, e.g., between production stations, in the production system. If a delay occurs in the planned transport task, this can be detected on the basis of SCADA or MES data, but it is not possible to determine whether this fault is one-off or systemic. Case-by-case faults, e.g., an operator has dropped a production component on the floor, do not require production model adjustment. In the case of systemic faults, e.g., a route is blocked, a production model adjustment would be useful to increase the accuracy and validity of the planning.

Systemic disturbances, e.g., congestion, cannot be taken into account without the real-time location information and the quality of the estimated arrival time is worse compared to the calculation when considering the location of other production components. It is thus proposed to take into account the location information of one or more production component. From the point of view of production system optimization, the transportation of the one or more production components is crucial. The arrival time of a production component will greatly vary depending on whether it is transported to the place of use by means of an AGVs or manually. The dependence of the means of transportation creates an additional dimension in the estimation of the arrival time (in addition to systematic disturbances). For this reason, the location information may thus first be categorized with respect to the transportation means. In a second step, the historical transport routes and transport times may then be analyzed in order to learn about the transport behavior of the respective means of transportation. For example, the average transportation speed, the primary transport routes and the production component that is transported may be considered when scheduling one or more production tasks, e.g., transportation tasks.

As shown in Figure 3, a so-called Receding Horizon Planner is connected to a real-time locating system, e.g., RTLS, an MES or SCADA and an ERP system which results in a solution that enables the following: finding a significantly better planning result despite a large parameter space, responding to unforeseen events close to real time, automated production planning without human intervention, and/or including location information.

The proposed production control system may thus comprise four components: locating system 30 with locating manager 40 for obtaining real-time location information (I), the SCADA/MES system for production control (II), the location intelligence module as a higher-level software solution with the integrated RHP module (III) and an ERP system (IV).

According to an aspect the locating manager 40 transmits the location information and preferably additional information (x,y,z, ID, timestamp) to the location intelligence module. To that end, different production components 11, 12, 13, 14 may have a tracker fitted to them, as described earlier. These production components 11, 12, 13, 14 can include product components, boxes or driverless transport systems. In addition, a connection to the MES system may be provided in order to obtain information on the status of the production system, e.g., current production progress of the respective machine, error states, etc. In order to get more information about production resources or to obtain the open tasks, a connection to an ERP system may be provided.

In addition, a connection from the MES system to the shop floor may be provided in order to transmit the rescheduling results of the RHP into the production system, e.g. for execution by one or more PLCs. This re-scheduling information can also be made available to an operator on the shop floor via info screens or smart watches.

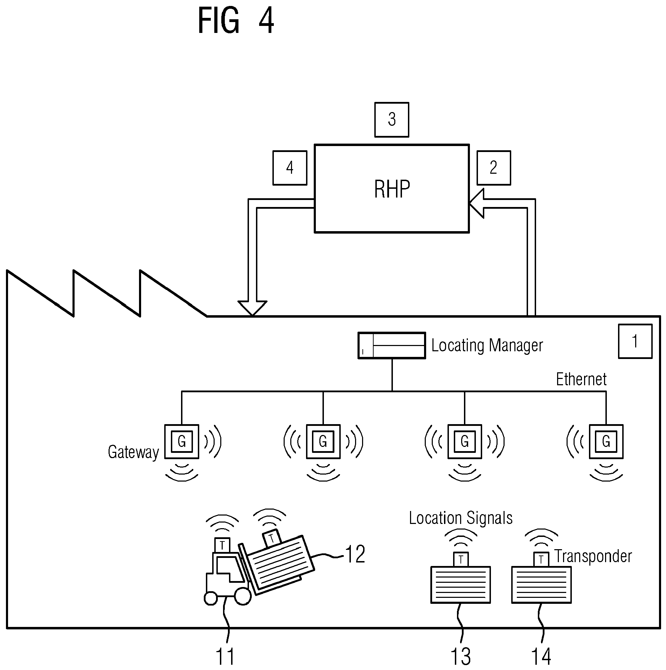

Turning to Figure 4, a planning cycle or scheduling loop may be performed according to one or more of the following steps. The production system may run undisturbed for a certain planning period, with the exact period having to be defined in advance. At the end of that period, the Receding Horizon Planner (RHP) retrieves all relevant information in the form of input parameters, such as, e.g., location information, production status, open orders or tasks, etc. Then, the RHP may calculate the best solution for the next planning horizon. After completion of the calculations, the best solution is returned to production system. The Production system may then start the next cycle or scheduling loop and the production steps or tasks according to the optimized plan are executed.

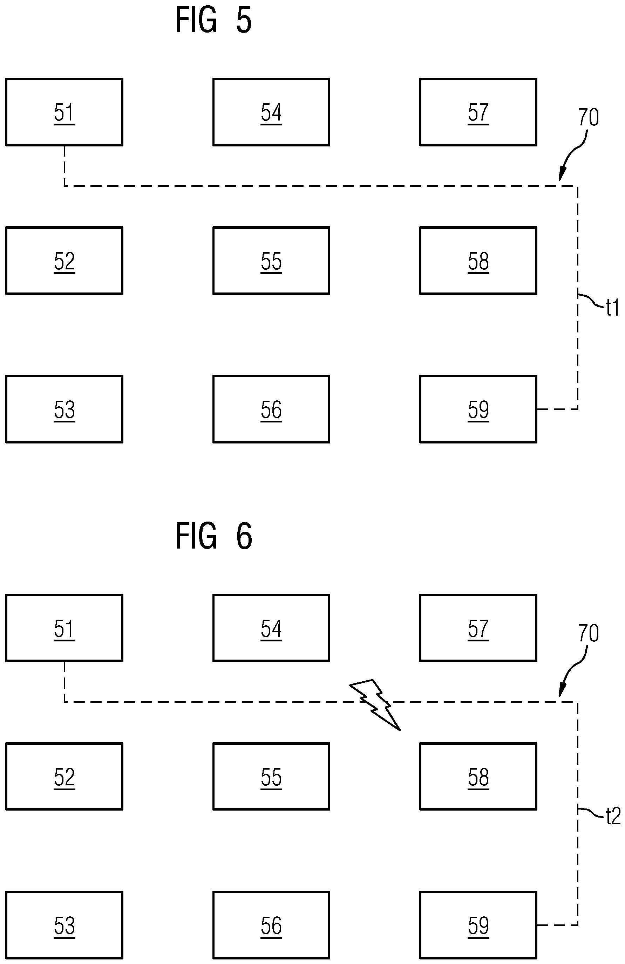

Turning to Figure 5, as already mentioned in the above, the production model may be adapted based on the location information from the locating system and/or the RHP, in particular in the case when a systematic fault and/or a delay in operation is determined. To that end, in case of an unplanned event it may first be determined whether it was a single or one-off event, or whether a systematic failure occurred that requires an adjustment of the model. Without a locating system, this can only be done at locations in the production system that are covered by an MES or SCADA system. Normally, these locations are at the production stations, 51-59.

As an example, the time for executing one or more tasks, e.g., assembly steps, carried out by production stations 51 and 59, is given in the following. In the case of an unconfigurable production task, the fixed planning time specified by the user is used for planning by the Receding Horizon Planner and the production model every time. In an adaptive production model, this value can be adjusted based on the actual values of the corresponding process durations, for example by averaging over the last ten steps of a specific assembly step. To that end, the location information and/or time stamps may be received by the obtained. In the case of a transport task 70 and without additional location information, the transport times t1, t2 of the same transport route 70 may be compared with each other. As shown in Figure 6 the transport time t2 may be delayed due to an obstacle causing a disturbance or delay. Therefore, the delay can be considered by adapting the production model and to provide an optimized tasks or sequence of tasks. For example, the transport route may be changed.

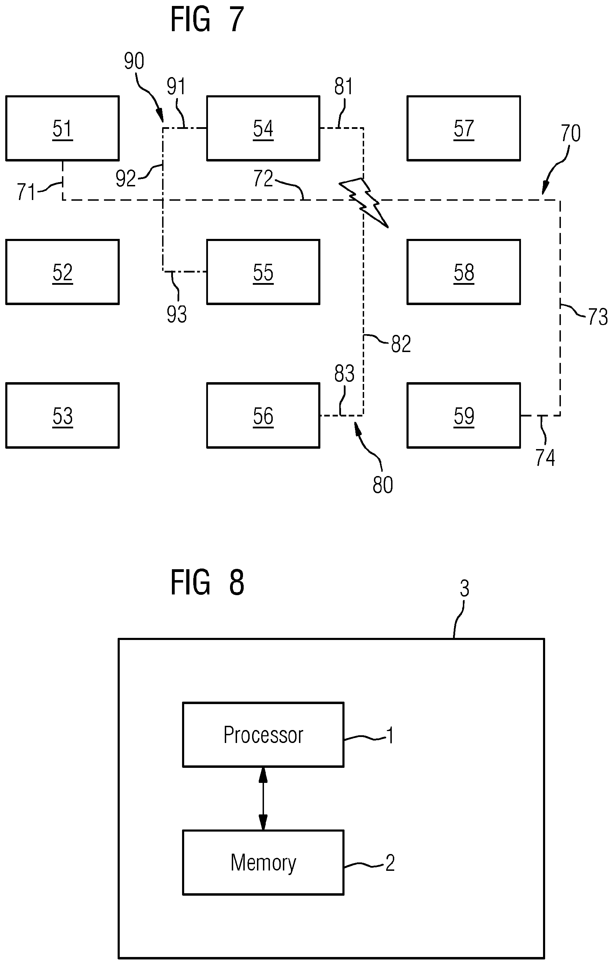

By means of a locating system, the localization of an obstacle causing a disturbance, indicated by a flash symbol in Figures 6 and 7, can be detected more quickly by also comparing different transport routes 70, 80, 90 with each other. The production system layout as shown in Figures 7, provides an example of such a detection. In the given situation three transports routes 70, 80, 90 each possessing a plurality of route sections 71, 72, 73; 81, 82, 83 and 91, 92, 93 are shown. In two of these transports tasks, i.e. 70, 80, the MES or SCADA system will provide a deviation from the nominal transport time because there is a disturbance in the junction of production stations 54, 57, 55, 58 corresponding to route sections 72 and 82 respectively. From a correlation of the locating system's location information for the delayed transport tasks on transport routes 70, 80 the location of a disturbance can be determined. The length of time the disturbance persists can be determined again from the mean value via the already known transport times on that route or section. For all other transport tasks that comprise a route section over this junction or route section, the corresponding delay can now be taken into consideration. Consequently, an optimized task or sequence of tasks can be determined, e.g., using the RHP. For example, a different transport route may be chosen. The case shown in Figure 7 is a special case in which the delay is exactly at a junction. In the general case, the delay may also be in another route section. If there are at least two routes using this route section, the disturbance may be limited to that section of the route. For the planning, it does not matter whether the disturbance is at the beginning, end or in the middle of the section of a transport route. A transport route may be partitioned into multiple route sections.

Turning to Figure 8 a production control system comprising a processor and a memory is shown. The memory may serve as a non-transitory computer readable storage medium, in which program code, e.g., in the form of a computer program is stored. The processor may serve executing the instruction of the program code. Thus, the processor may be used for implementing the method steps according to the embodiments described in connection with Figures 1 to 7. In particular the one or more processor may be used to execute the functions of the MES or SCADA, ERP, locating system, and/or the RHP as described in the above. For the sake of simplicity, a single processor and memory is shown however, multiple processors and memories may be used for storing and executing the program code and the corresponding functions as described. The processor and the memory may serve for controlling and/or monitoring the production system. The processor and the memory may thus serve as a production control system for controlling and/or monitoring the production system.

## Claims

1. A method of optimizing a production system (10), comprising:
receiving, by one or more processors (1), input parameters (X) comprising, preferably real time, location information of one or more production components (11, 12, 13), determining, by the one or more processors (1), one or more transport times between production stations (51, 59) of the production system (10) based on the location information of one or more production components (11, 12, 13),
adapting, by one or more processors (1), a production model (20) of the production system (10) based at least in part on the transport times,
and determining, by the one or more processors, one or more tasks to be executed by the production system (X) based on the adapted production model (20).

2. The method according to the preceding claim, determining, by the one or more processors (1), a current state of the production system (10) based at least in part on the input parameters from the production system (10), the current state representing a utilization of production resources of the production system (10), and
determining, by the one or more processors (1), the one or more tasks to be executed by the production system (10) based on the current state of the production system (10).

3. The method according to any one of the preceding claims, determining, by the one or more processors (1), the current state of the production system (10) for one or more scheduling loops of the one or more tasks to be executed by the production system (10) and
adapting, by the one or more processors (1), the production model (20) for one or more scheduling loops of the one or more tasks to be executed by the production system (10).

4. The method of according to any one of the preceding claims,
the production system (10) comprising a locating system (30) for locating the one or more production components (11, 12, 13), preferably in real time, and for providing the one or more input parameters (X), preferably the location information of one or more production components.

5. The method according to any one of the preceding claims, wherein the one or more tasks comprise one or more transport tasks of the production components within the production system (10), wherein preferably, a transport task comprises transporting a production component (11, 12, 13) according to a transport route (70) between two production stations (51, 59) of the production system (10).

6. The method according to any one of the preceding claims, the step of adapting
comprising:
comparing transport times (t1, t2) of a first transport route (70) between production stations (51, 59) of the production system (10).

7. The method of optimizing production, the step of adapting comprising:
determining one or more second transport routes (80, 90) intersecting with the first transport route (70), and
comparing a transport time of the one or more second transport routes (80, 90) with the transport time (t1) of the first transport route.

8. The method of optimizing production, the step of adapting comprising:
wherein a transport route (70) comprises a plurality of route sections (71, 72, 73), and
wherein intersecting transport routes (80, 90) share one or more route sections (72, 82, 92), and
comparing the transport times of one or more route sections (72, 82, 92) shared between different transport routes (70, 80, 90).

9. The method of optimizing production, the step of adapting comprising:
determining a temporal (one-time) or permanent (recurring) obstacle on one of the transport routes (70, 80, 90) based on location information form the locating system (30), e.g., based on transport times for one or more route sections (72, 82, 92).

10. The method of optimizing production, the step of adapting comprising:
executing, by the production system (10), the one or more tasks determined.

11. A computer program, comprising program code that when executed performs the method steps of any one of the preceding claims.

12. Computer readable storage medium (2), comprising program code that when executed performs the method steps of any one of the preceding claims 1 to 10.

13. Production control system (3) comprising one or more processors (1) operative to adapt a production model (20) of the production system (10) based at least in part on input parameters (X) from the production system (10), and to determine, by the one or more processors (10), one or more tasks to be executed by the production system (10) based on the adapted production model (20).
